# EUROPEAN PATENT APPLICATION

(11) **EP 1 164 526 A2**
(43) Date of publication of application: **19.12.2001**
(21) Application number: 01304690.9
(22) Date of filing: 29.05.2001
(51) Int. Cl.: G06F 17/60

(54) **Shop including multi-facility**

(30) Priority: 31.05.2000 JP 2000161748
(71) Applicant: Kabushikigaisya Digital Conveni, Tokyo 104-0028 (JP)
(72) Inventor: Kashiwabara, Taketoshi, Tokyo 104-0028 (JP); Ishida, Yukihiro, Tokyo 104-0061 (JP)
(74) Representative: Lyndon-Stanford, Edward Willoughby Brooke

(57) **Abstract**

In order to allow the resources of a printing shop to be used for the immediate production of high quality printed matter, a shop provided with an in-shop local area network (LAN) 40 connecting to a computer 20 operated by an operator and a printer 1, a client-occupiable private territory R1 for each client is provided. In the client occupiable private territory, a client accessible computer 20 connecting to the in-shop LAN 40 is provided. The in-shop LAN 40 is connected to an external network N connecting to a server 45 of a data management center which manages data of a plurality of the shops. Data created by the client and data created in relation to the client are stored in a client-specific data storage area 61 for each client issued with an ID provided in the server 45.

## Description

### BACKGROUND OF THE INVENTION

### 1. FIELD OF THE INVENTION

This invention relates to a shop performing a printing process by an operator as a substitute for a client, which is added with a facility of allowing a client to be assigned an office-work space and to operate a computer.

### 2. DESCRIPTION OF RELATED ART

Instead of conventional writing means and calculating means, document and image creations and data processing using a computer have been popularized. Under the present circumstances, office work cannot be progressed without a computer. As compared with the conventional writing implement which is portable everywhere, such use of the computers is accompanied with an inconvenience in which office work cannot be done in a mobile space such as on the road. Therefore, an attempt has been made to downsize a computer to a portable size such that a user can use the computer in the mobile space. Due to explosive development of devices and the circuit technology, downsizing of a high performance computer to such a small size as to be carried has been successful. However, concerning a computer as an implement used by a person, an input device such as a keyboard and a display device such as a display which are interfaces to the fingers and eyes of a person are naturally required with an approximate size as long as the dimensions of modules of a human are invariable. No matter how small CPUs and storage units may be reduced in size, it is impossible to reduce the input device and the display device in size without any limitations. Accordingly, on the computer placing weight on the portability, the input device and the display device have an inappropriate size in terms of human engineering. This puts an enormous burden on users and leads to a significant decrease in operating efficiency in comparison with use of a normal computer. Further, this is a serious problem for the middle-aged and the elderly whose fingertips become awkward. In contrast, the computer including the input device and the display device having an appropriate size in terms of human engineering has a defect in portability, which leads to a disadvantage of the carrying of the computer on a day-to-day basis.

On the other hand, due to the explosive development in density of a recording medium, high volume data of documents and/or images can be stored on the computer body or the recording medium for carrying. The data stored on the computer body or the recording medium is used to do office work, and therefore, the computer body or the recording medium storing the data is required to be carried in order to do office work in the mobile space. When the user goes out leaving the computer body or the recording medium at the office or forgetting about downloading the data thereon, a problem of impracticability of office work arises. In addition, the carrying of document and/or image data including important information at all times means that the user is at risk of theft and loss at all times. This is an undesirable situation in terms of security.

As attempts to eliminate the aforementioned disadvantages, computers are installed in shops on streets and rented by the hour such that the user can use the computer in a place away from the office. Such attempts include an attempt in which hourly rental computers are installed in shops in which an operator performs a printing process as a substitute for a client.

According to the above attempts, since dimensions or weight of the hourly rental computer installed in the shop is not limited, the user can use the computer to do office work without any burdens in operation of the computer even in a place away from the office. In this case, however, the user must carry the recording medium storing the document and/or image data which is prerequisite for doing office work as in the case of the portable computer described hereinbefore. Specifically, when the user wants to do office work using a small amount of spare time in a place away from the office or when the user needs to do the office work under the pressure of urgent necessity, if the user does not carry the document and/or image data which is prerequisite for doing office work, this limits the user's office work.

Further, even if the same OS (Operating System) or an application program as that usually used by the user is fortunately mounted on such a hourly rental computer, as a matter of course, the initialization of OS, a desktop in GUI (Graphical User Interface) environment, and an operating environment of the application program for operational mode and attributes for characters and graphic, and so on, are different from those set on a computer usually used by the user at the office or home. Those differences effect a sense of incongruity in operation, resulting in a disadvantage of reduction in efficiency of office work. If the operating environment is changed to equate to that usually used by the user, significantly much time is required for the changing.

On the other hand, for the management side of such computers for rent by the hour, the changing of the operating environment from a default value by a client without permission is undesirable because such changing results in giving a much more sense of incongruity in operation to the next client. Further, depending on the situation, such changing may lead to a crash of the start environment such as system errors. This is a great bottleneck in the running of the business of renting the computers by the hour.

The foregoing has pointed out the disadvantages on use of a computer in the mobile space. Concerning use of a computer at the office or home, several disadvantages aside from the aforementioned disadvantages exist in relation to the present invention as follows.

Previously, computers have been spotlighted only on a function for creating documents and images, and not on a printed output function for the data of the created documents and/or images that much. The reason is that, on resolutions and the printing quality, the performance of an output device such as a printer did not reach, in the first place, a satisfied level in comparison with conventional printed matter using an original plate or typed on a typewriter. However, with improvement of the performance of printers and development of color printing technology in recent years, the quality of a printed output from the computer approaches that of the conventional printed matter removing a distinction in quality. For this reason, the printed output from the computer has come to be used as the final printed matter or as a pasteup.

In the circumstances under which the printed output from the computer is recognized as a final product as discussed above, a problem first raising is variations in an appearance of the printed matter produced by an operator. For example, for making a report or a brochure, when a plurality of staffs use the respective computers and the same application program to divide up the producing work among them, even if the formatting is predetermined, the appearances on the printed matter may become different. The reason is that the current multifunction, high-performance document and/or image preparation program has too many items capable of being set by the user, and also the formats installed on the computer are diversified, resulting in impossibility of accomplishing consistency of the products of the individual staffs only by means of simply standardizing the format. The problem becomes obvious especially when the staffs work in different places. There is likelihood that such circumstances further increase with popularization of the telecommuting using a network.

The next problem is a difference among three materials of an actual subject, an image displayed on the display, and an actual printed output from the computer. Although the present computer has the basic concepts of WYSIWYG (What You See Is What You Get) with GUI, the image displayed on the display is often different from the actual printed-output product in, e.g., font image, thickness of line, geometry of graphic and color tone. Further, in the case that the actual subject is captured on the computer, the above difference is added with the complicated factor of an inconsistency in color tones between the object and the display and between the display and the printed-output product.

The above phenomenon causes two problems. One of them is difficulty of fine tuning colors. The image program adjusts various settings on the screen to change color tones. However, the adjustment result is reflected in real time and the operator can make visual identification of it only on the display screen. Here, it cannot be yet determined whether the color tones of the subject are precisely reproduced on the actual final printed-output. Hence, repeating test printouts is needed. Not only efforts and times are required, but also a high level experience and skill is required for the work itself. The other problem is to check color tones of a transferred image. The wide spread use of the Internet in recent years has allowed utilizing electronic mail to transfer image data. With the aid of the utilization, it is widely performed to transfer a photograph or an outward appearance of an article to a remote location. Taking one specific example, while a building is being constructed, there emerged a need for immediately replenishing stone for an exterior wall. In placing an order to a stone company at a remote location for the equivalent of the stone used in the construction, the electronic mail is used to transfer the photograph. In this example, a receiver of the image can make a visual identification of the stone on the display. However, if an image program or the display is different from that used in the sender, regardless of how the sender tunes up colors between the subject and the image on the display, there not always a guarantee that the transmitted image precisely reproduces the color tones of the actual stone. Further, if an output device or the image program is different from that used in the sender, even though the printed output of the transmitted image is produced, there is also not always a guarantee that it precisely reproduces the color tones of the actual stone. In the real scene, generally, the receiver produces printed-output of the transmitted image and then carries it out to the worksite for reference. Thus, the problem is serious. In consequence, in order to confirm precise color tones, there is no choice except the photograph of the subject is sent by mail, which makes the use of the electronic mail meaningless. Especially, if a sender is in abroad, a time loss cannot be neglected.

### SUMMARY OF THE INVENTION

A shop according to the present invention is characterized by having therein: printing means with a computer operated by an operator; a client occupiable private territory; a client accessible computer placed in the private territory; and an in-shop LAN connecting to the client accessible computers and the printing means with the computer operated by the operator, and in that the in-shop LAN is connected to an external network connecting to a server of a data management center which manages data of a plurality of the shops, and in that the server is provided with a client-specific data storage area for each client issued an ID for storing data created by the client and data created in relation to the client.

The present invention has the premise of considering a multi-facility in which a printing service shop includes the client accessible computer which the client can use. Needless to say, such multi-facility is mere consolidation of well-known means, and in itself is an ordinary idea. Also there are well-known examples as described hereinbefore. However, at least as far as the inventors of the present invention know, it has never been recognized or considered that there is a possibility of adding a new element to such a shop to produce a profound effect much more than a mishmash of insignificant effects.

A first configuration element added in the present invention is a point on which the client accessible computer is connected to the in-shop LAN connecting to the printing means with the computer operated by the operator. This allows resources of the printing service shop to be used for immediately producing printed output of a document and/or image created by the client using. Further, since the resources have high performance appropriate for business and are operated by the professional operator, in comparison with the use of an output device of a computer at the office or home, it is possible to obtain significantly high quality printed matter. In the stage of the addition of the configuration element, the effect is obtained, but the concept is not yet fully developed.

A second configuration element added is a point on which the in-shop LAN connects to the external network connecting to the server of the data management center which manages data of a plurality of the shops, and the server is provided with the client-specific data storage area for each client issued an ID for storing data created by the client and data created in relation to the client. By combining the second configuration element with the aforementioned first configuration element, the present invention exerts its unique effects. Specifically, due to the provision of the client-specific data storage area for each client issued an ID, so long as a client has means for being identified, if the client does not carry a recording medium as in the prior art, in the shop according to the present invention which is located away from an office or house of the client, the client can have access to the client-specific data storage area only for the client to read and write a document and/or image or data in a database or the like. At first glance, this gives the impression of not differing much from the case of using a mail box of an electronic mail server on the Internet to store data. However, the importance in this point is, in the present invention, the use of the printed-output means of the printing service shop and the existence of a plurality of the shops which are connected to the server of the data management center as described hereinbefore. This enables the client to enjoy conveniences such as mobility in space while continuing to use a private computer environment. One example is the assumption that a businessman who makes a trip from Tokyo via Hong Kong to London produces a document in an airport during a waiting time for an airplane and hands the document to a business acquaintance in London. If there are the shops according to the present invention at the airport in each city, it is possible for the businessman to create the document partially at the airport shop in Tokyo, then to finish the document at the airport shop in Hong Kong, and then to receive a printout of the completed document at the airport shop in London.

In the present invention, if a client has access via a computer outside the shop to the client-specific data storage area for the client only in the server of the data management center, and the shop of the present invention is utilized in a combination with a mobile terminal (including a cellular phone added with a mobile terminal function), the present invention complements the mobile terminal having the advantage of sending electronic mail to a person on the move, but having the disadvantage of the limited display ability and impossibility of printing out. For example, if a large volume of documents including graphics is sent to a person on the move through electronic mail, the mobile terminal cannot possibly display nor print them out. However, the person transfers the received electronic mail into the client-specific data storage area for the person only in the server of the data management center of the shop according to the present invention, and then visits one of the shops near the person. Thus the person can use the client accessible computer to read the sent reference and further to print it out.

As described hereinbefore, in the present invention, a client obtains an ID to thereby use the client accessible computer in the shop as if it is only for the client's use. This provides the effect in which the client can practically use the shop, including such "a virtual my-computer", as a satellite office.

The foregoing examples are of "the virtual my-computer", viewing the present invention from an angle in reference to "the created data". However, needless to say, with only the provision of the data area dedicated to individual client, the computer is insufficient as "the virtual my-computer". The first requirement is to equip OSs and application programs which are usually used by clients. Concerning this point, in response to an increase of variations of OSs and application programs, conventional rental computer facilities have earnestly depended on commercial efforts to purchase the OSs and application programs as various types as possible for installation. Needless to say, in the case of a large number of rental computers, the installation of the OSs and application programs on the individual computers results in an increase of a burden. A further problem is the fact that all of the clients do not always use the most up-date version of an OS and/or an application program. Many of the application programs have versions considerably differing in an operating method from each other. If a client cannot but use a different version from that usually used by the client on a computer, it cannot be said that the computer is "the virtual my-computer". Naturally, provision of computers installed with individual versions of each of the OSs and/or application programs is impracticable with concerning various combinations thereof. Alternatively, installation of all versions of each of OSs and/or application programs on one computer is technically difficult as well as it makes a user confused.

For these reasons, in the present invention, the client accessible computer does not have a specified OS and application program, and executes the writing of an OS and an application program transferred from a program server as required. This allows the shop to provide the client accessible computer installed with the OS and the application program including the version designated by a client in advance. In this event, after use of the client, the data on the designated OS and application is erased from the computer. Therefore, no matter how the client operates the computer, this operation has no effect on use of the next client. Further, there is no problem even if destruction of a starting environment, e.g. system errors, is produced. In consequence, the aforementioned bottlenecks of the computer-rental business are eliminated. If computer viruses infect from a medium carried by the client, the infection has no effect on the next client.

Assuming that a client uses a computer for the client use only at the office or home, an operating environment of the computer generally is not in a default state and is changed by the client. "The operating environment" described herein includes, for example, items of initialization typically such as installed fonts, resolution of a screen on an OS, reference language, system date, system time (in many cases, a foreigner uses a time of one's mother country) ; a desk top; items of initialization in each of various programs; and attributes for characters and graphic in a program managing documents and/or images, all of which have great effect on operability of the computer. Therefore, even if a computer having the OS and application program of the version which are the same as those usually used by a client is prepared for the client while being on the road, when an operating environment of the computer is in a default state, the client feels something wrong with operability and efficiency of office work is reduced. If the operating environment is changed to be equivalent to that usually used by the client, a considerable time is required for changing. This makes the client's intention of working during a small amount of spare time on the road meaningless.

For this reason, in order to accomplish the perfect "virtual my-computer", the present invention has a configuration in which data on the operating environment produced when a client issued an ID operates a client accessible computer in the shop, is transferred into the client-specific data storage area only for the client in the server of the data management center for storage, and the data is transferred into and written on a chosen client accessible computer provided in a chosen shop as required. This allows the client to operate a computer having the same operating environment as that used by the client last time, regardless of a location of a shop or a computer.

As described hereinbefore, according to the shop of the present invention, "the virtual my-computer" for a client use only can be provided to the client while being out from the office. However the present invention is designed not only to provide only a single client with the conveniences and advantages, but also to provide a certain group of clients with the conveniences and advantages which exceed a level of "the virtual my-computer" and are produced by effects different in nature from the effects thereof. Specifically, in the present invention, data of an operating environment for a certain client is transferred into and written on a plural of client accessible computers to thereby allow a plurality of clients to operate the computers in the same operating environment as that used by the certain client. In this case, the client accessible computers used by the plurality of the clients have access to the documents and/or images stored in the client-specific data storage area of the specific client to use the data in common between the specific client and the plurality of the clients. This design results in eliminating the problem arising when a plurality of staffs divide up the producing of single printed matter among them as described hereinbefore.

"The virtual my-computer" provided to clients by the shop according to the present invention embraces not only the computer body but also the output device. Specifically, in the present invention, the printed-output means is connected to the in-shop LAN connecting to the client accessible computer as described hereinbefore. When the output devices of the common type are respectively placed in a plurality of the shops, it is possible to obtain printed matters of the same quality in the individual shops because an OS, an application program and an operating environment for the client accessible computer which sets up a condition for the output device can be used in common among a plurality of the shops for each client issued an ID. For example, while a building is being constructed in Los Angeles, a need for immediately replenishing stone used for an exterior wall arises. In placing an order with a stone company in Rome for the equivalent of the stone used in the construction, electronic mail is used to transfer a photograph of the stone. In this event, provided that the shop according to the present invention is fully exploited as follows, the order accepter can precisely grasp color tones of the stone.
(1) The orderer takes a photograph of the stone and carries it in a shop of the present invention in Los Angeles. The orderer inputs the photograph to a client accessible computer for creating image data, and corrects color of the resulting image to make a match between the color tones of the photograph and color tones of printed output which will be output from the printer provided in the shop in cooperation with the operator performing the printing service. The image data with correction of colors is transferred and stored into a client-specific data storage area dedicated to the orderer which is provided in the data management center.
(2) Next, the orderer makes contact with the accepter (the stone company) in Rome and asks them to go to a shop of the present invention in Rome. Continuously, the orderer communicates with the shop in Rome and requests them to access the client-specific data storage area of the orderer in the server of the data management center, to retrieve the aforementioned image data and to produce printed output of the image using a printer of the same type and in the same operating environment as those used by the orderer in the shop in Los Angeles.

### BRIEF DESCRIPTION OF THE DRAWINGS

Fig. 1 is a plan view of a shop according to the present invention.
Fig. 2 is a block diagram illustrating a first embodiment of a system for the shop according to the present invention.
Fig. 3 is a block diagram illustrating a second embodiment of a system for the shop according to the present invention.
Fig. 4 is a block diagram illustrating a third embodiment of a system for the shop according to the present invention.
Fig. 5 is a flow chart illustrating a working procedure when a client comes in the shop according to the present invention.
Fig. 6 is a flow chart illustrating a working procedure of the first embodiment of the system of the shop according to the present invention.
Fig. 7 is a flow chart illustrating a working procedure for accepting a reservation in the shop according to the present invention.

### DETAILED DESCRIPTION OF THE PREFERRED EMBODIMENTS

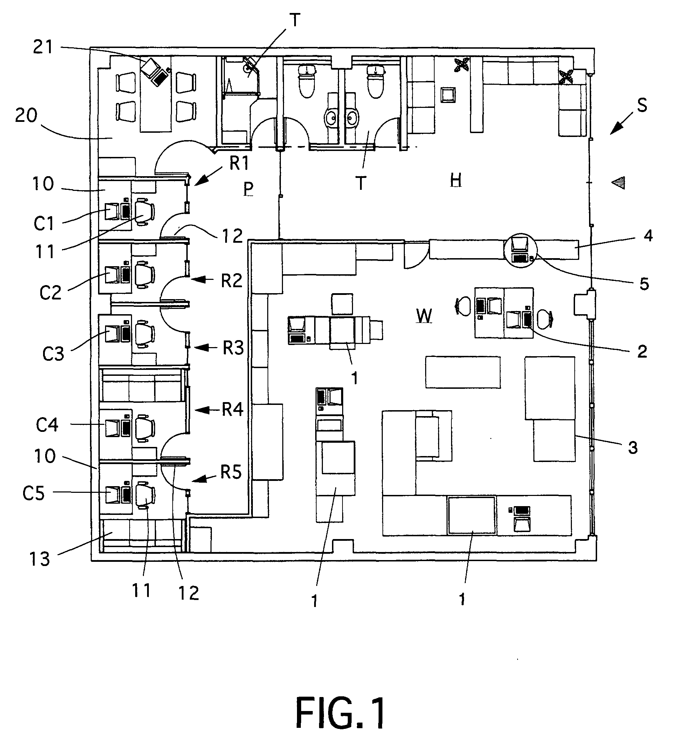

Fig. 1 is a diagram illustrating an example of shops according to the present invention. The shop of the example has a printing service space W, a rental computer space P, and a lobby space H serving as a common area for both the spaces W and P.

The printing service space W is a space for performing the printing service by an operator as a substitute for a client. Printing is so-called "electronic printing" in which a printer connected to a computer prints and outputs a document and/or image which is electronic data. Additionally, the printing service performs inputting, creation and edits of a document and/or image to be printed, and cutting and book-binding after printing. In Fig. 1, reference numeral 1 represents various printers, reference numeral 2 represents computers used for inputting, creating and editing the document and/or image, and reference numeral 3 represents various associated equipment such as a cutter, a puncher, a binder, and a laminator.

The rental computer space P is a space for allocating client occupiable private territories for individual clients. The "client occupiable private territory" described herein refers to a space in which a client can use a rental computer to do office work while regarding the space as his/her own space, of which the simplest example is a desk for client use. In the example, the client is isolated from the outside world to be absorbed in the office work, and the isolated areas are allocated as defined spaces R1-Rn. Specifically, each of the defined spaces is a private room defined with walls, five private rooms R1 to R5 being exemplified herein. Needless to say, it is possible to assume that the defined space is booth form partitioned with partition plates or capsule form having an outer shell. The private room is furnished with a desk 10 and a chair 11, and further may be furnished with, for example, a sofa 13 for a break or a nap. Each of the private rooms R1 to R5 as explained above is provided with a client accessible computer 20 for client use. Each of the private rooms includes a door 12 and is constructed so that a key is necessary for going in and out of the private room and in order to prevent the client accessible computer from being operated by others without permission before the client checks in or when the client leaves the private room during a reserved time period.

In the example, the rental computer space P further includes a conference room M provided with a videoconference device 30. The videoconference device 30 allows a two-way communication in voice and video with another videoconference device provided in another shop, and is provided with a camera with a microphone and a display with a speaker.

The lobby space H serves as a common area between the printing service space W and the rental computer space P, and is used by clients utilizing the rental computer space as well as clients requesting the printing service. Specifically, a client having entered the shop first checks in at a reception counter 4, and receives a key to an assigned private room. Reference numeral 5 in Fig. 1 represents a reception computer for identifying an ID of the client and for setting up the client accessible computer provided in the assigned private room in the above event. In the example, the lobby space H includes rest rooms T for the clients and the rental computer space P includes a shower room B for the clients.

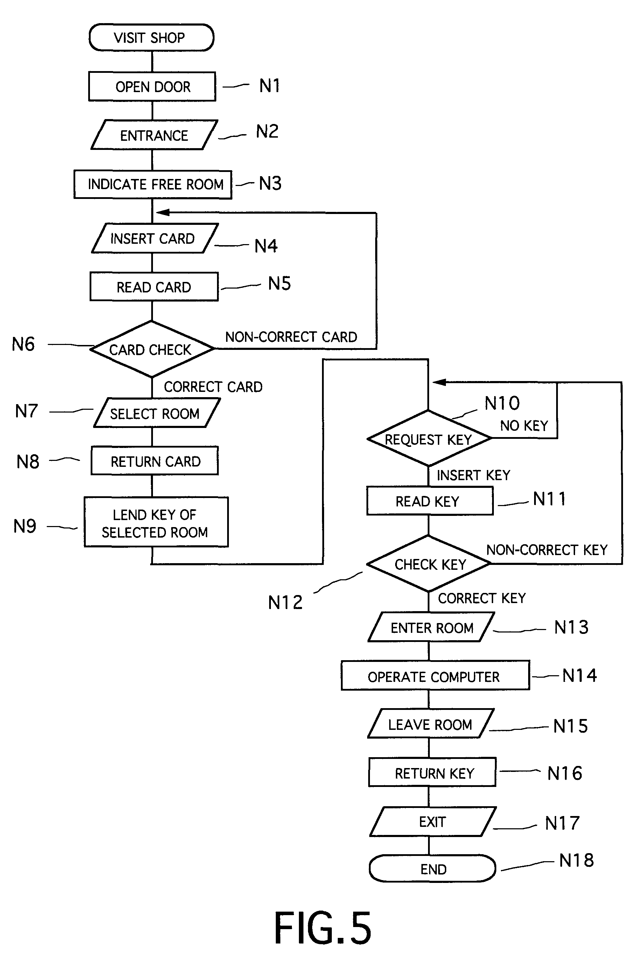

Next, steps from when a client enters the shop of the present invention until the client enters a private room Rwill be explained with reference to the flow chart in Fig. 5. In the shop, only after registering to obtain an ID in advance, a client is permitted to use a client accessible computer. This is for ensuring the security because of permission of access to a client-specific data storage area in the server of the data management center. In the example, an ID is identified by showing an ID card 21 issued to the individual client, but the identification process is not limited. As a matter of course, the ID can be identified by, for example, an ID number and a password or biometrics using the fingerprints, the iris or the like.
(1) A client after entering the shop first shows his/her ID card at the reception counter 4, and undergoes the identification process through the reception computer 5 (steps N1 to N6).
(2) As a result, the identified client is assigned a private room and receives a key of the assigned private room (steps N7 to N9).
(3) The key is required to enter the corresponding private room. A person not having a correct key cannot enter any private room (step N10 to N18) . For starting the client accessible computer, as described hereafter, it is required to show the ID card again for the identification process.

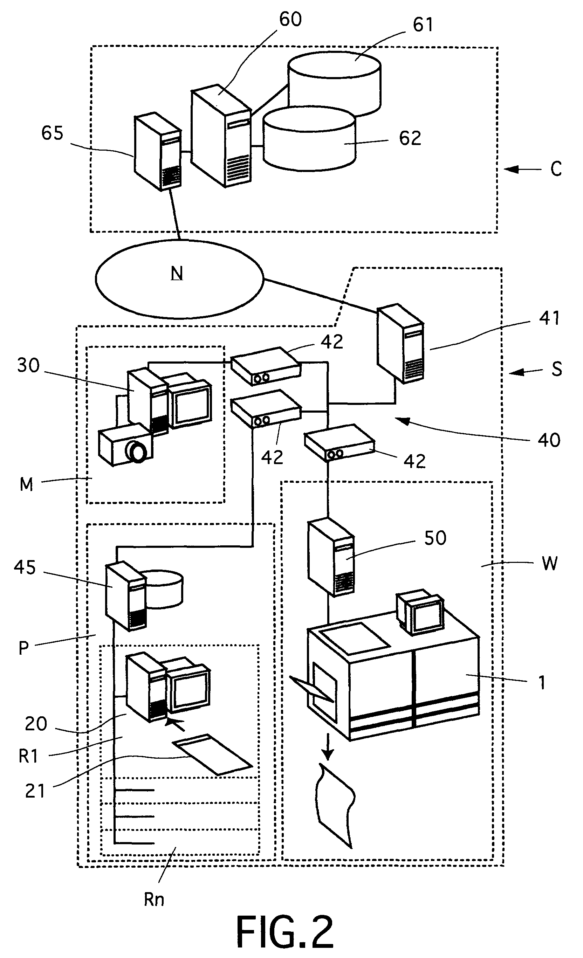

Next, an explanation will be made for a computer and a system configuration of peripheral equipment of the shop according to the present invention. Figs. 2 is a block diagram of a first embodiment of the system of the shop according to the present invention. In the shop S of the present invention, an in-shop LAN 40 connects to a network of the inputting, creating and editing means and the printed-output means for the documents and/or images which are provided in the printing service space W, and also to a network of the client accessible computers provided in the respective private rooms R1 to Rn in the rental computer space P. Fig. 2 illustrates, in the printing service space W, a manuscript receiving server 50 for receiving the document and/or image data created by the client, and a printer 1 with a computer. The first embodiment includes the conference room M provided with the videoconference device 30 which is connected to the LAN 40 in an analogous fashion. In Fig. 2, reference numeral 41 represents a gateway for connecting the in-shop LAN 40 to an external network N. Reference numeral 42 represents a router for effecting an interconnection between the networks of the printing service space W, the rental computer space P and the conference room M.

In the first embodiment, the client accessible computer 20 does not have a specified OS and application program. Instead, a program server 45 on the in-shop LAN 40 accommodates OSs and application programs and transfers an OS and application program to the client accessible computer 20 for the writing. The writing operation is performed by properly selecting the appropriate OS and application program, including its version, to serve the client's preferences for each use. After the use of the client, the computer 20 is initialized and provides for the writing of the appropriate OS and application program to serve the next client. In this event, if a storage unit of the client accessible computer 20 is volatile, the computer 20 can be completely initialized. Hence, in comparison with a nonvolatile storage, e.g. a hard disk, it is possible to obtain an effect of reducing the risk of reconstituting and stealing the prior data after the initialization.

In Fig. 2, reference symbol C represents a data management center which includes a server 60 connecting to LANs of a plurality of shops via the external networkN such as the Internet. Reference numeral 65 represents a gateway for connecting the network N. The server 60 is provided with a client-specific data storage area for each client issued an ID to store data created by the client and data created in relation to the client. The client-specific data storage area includes a user area 61 which the client can use voluntarily, and an operating environment area 62 for automatically storing data on an operating environment produced when the client operates the client accessible computer 20 in the shop. In the user area 61, data created by the client, a program brought by the client, and so on are stored according to his/her desires, and selected by the client to transfer therefrom into the client accessible computer 20 for the writing. In the operating environment area 62, besides the data on an operating environment of the client which has been detailed in DESCRIPTION OF RELATED ART, a specification table of OS and the application program used by the client last time is stored. Unless otherwise specified, the OS and application program based on the specification table are invoked from the program server 45 provided in each shop and written on the client accessible computer 20 and the operating environment is written thereon.

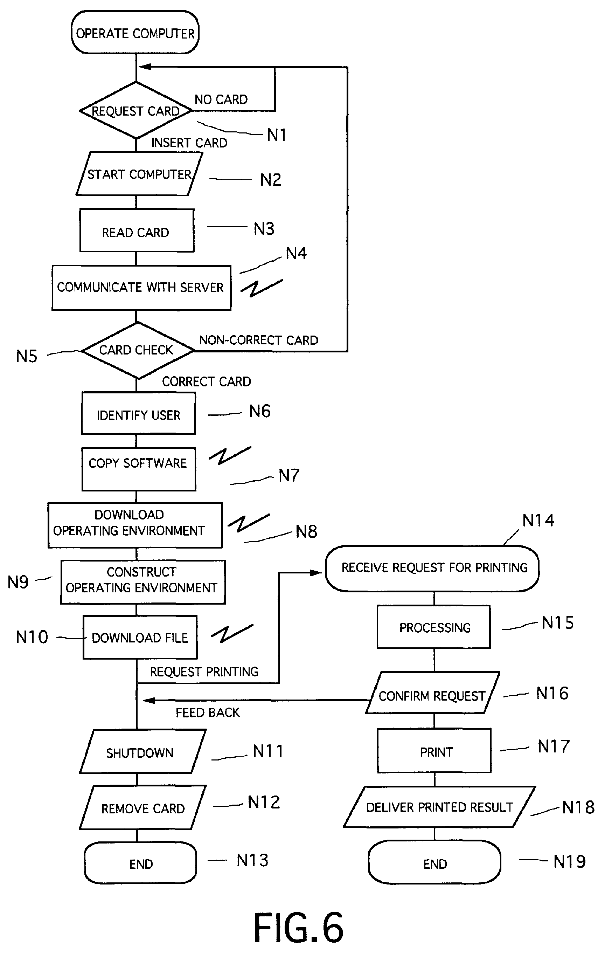

Next, steps in which the client having entered the private room R does a series of office work in the shop according to the present invention will be described with reference to the flow chart in Fig. 6.
(1) The client accessible computer 20 triggers a start program with an ID card 21 of a client serving as a start key, and, after starting, transfers the card information into the server 60 of the data management center C for the identification process in the data management center C (steps N1 to N4).
(2) After identification of the ID of the client, the specification table stored in the operating environment area 62 of the client-specific data storage area is referred. Then, the resulting OS and application program corresponding to the ID of the client is retrieved from the program server 45 provided in the shop to be written on the client accessible computer 20 (steps N5 to N7). Further, data on the operating environment produced when the client operated the client accessible computer 20 last time, is transferred from the above operating environment area 62 to be written on the client accessible computer 20. Thus the client-specific operating environment is constructed (steps N8 to N9).
(3) In this stage, the client accessible computer 20 finishes the setup and the client can freely use the computer 20. At the same time, the client gains access to the user area 61 in his/her client-specific data storage area in the server 60 of the data management center C. The client uses the client accessible computer 20 to read the document and/or image or the program stored in the user area 61 or to write a new created document and/or image thereon as if it were a computer for the client use only (step N10).
(4) During the work, the client can make a connection with an operator of the printing service space W through a manager of the in-shop LAN to transfer the created document and/or image thereto for a request to print it. Alternatively, the client can make requests for processing of proofreading, edits, image processing, a conversion of languages (translation), or the like in addition to the printing. The operator receiving the request transfers the processed file to the client for confirmation of the request, then prints the file if receiving the confirmation (steps N14 to N17). The print result is supplied directly to the client in the shop or delivered to the client sometime later (steps N14 to N19). In this event, the processed file may be stored in the user area 61 of the client-specific data storage area for use later on.

The request for the printing or other processing can be made through online when the client visits the shop as described above. Alternatively, for making such a request, the client can designate in advance the file, stored in the user area 61 of the client-specific data storage area, to the manager of the in-shop LAN or a manger of the data management center. The operator of the shop or the manager of the data management center accesses the corresponding user area to retrieve the designated file. After the requestedprocessing, the operator or the manager stores the resulting file in the user area and then printed-outputs the file in another shop designated by the client to supply it to the client. In this case, the client may make requests to create a new document and/or image, to store it in the user area, and to produce printed-output of the created document and/or image in a shop designated by the client for supplying it to the client.

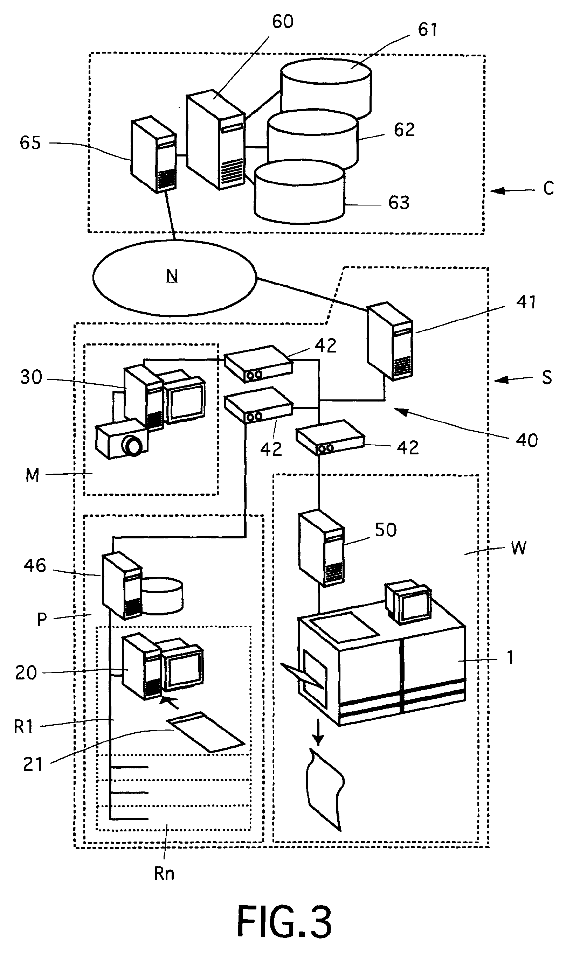

Fig. 3 is a block diagram of a system of a second embodiment of the shop according to the present invention. The program server accommodating the OSs and application programs is placed on the in-shop LAN 40 in the first embodiment. In contrast, in the second embodiment, the program server is placed as a program area 63 in the server 60 of the data management center C. With this configuration, the system has an advantage of eliminating the need of preparing various types of OSs and application programs in each shop.

However, if the OS and application program having great data capacity are transferred using the external network N such as the Internet, it is expected that a much transfer time is required. Therefore, in the second embodiment, the in-shop LAN 40 is connected to a cache server 46 for the client accessible computers 20. Data is transferred from the data management center into the cache server 46 and accumulated therein. In other words, in the accepting stage of a reservation for using the client accessible computer 20 from a client, before the reserved time, the required OS and application program are transferred from the program area 63 in the server of the data management center into the cache server 46 on the in-shop LAN 40 in advance and accumulated therein. With this configuration, the client can immediately use the computer without a waiting time produced by the transfer. Needless to say, at the same time, operating environment data for the client may be transferred from the operating environment area 62 into the cache server 46 and accumulated therein.

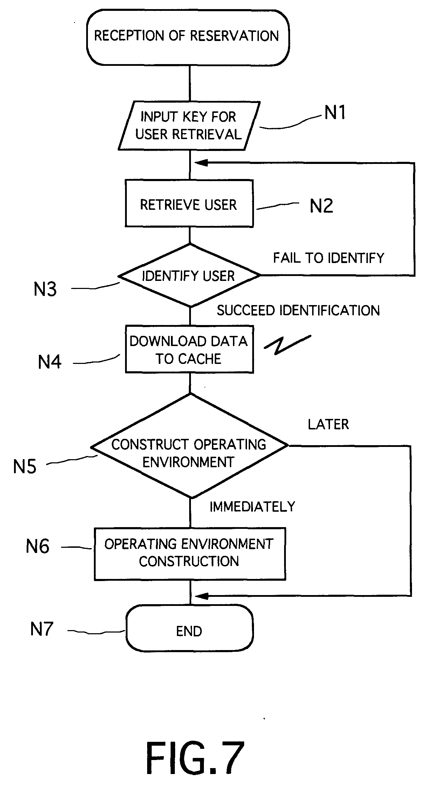

The above reservation process is explained with reference to the flow chart in Fig. 7.
(1) An ID is required for reservation, but since the data created by the client and stored in the user area 61 is not transferred into the cache server 46, a high level of security may not be required. Hence, the reservation is accepted by informing a name, an ID number or the like (steps N1 to N3).
(2) After the client is identified and the reservation is accepted, at an appropriate time before the reserved time of the reserved day, the required OS and application program and the required operating environment data for the client are transferred from the server 60 in the data management center C into the cache server 46 in the shop for accumulation (step N4).
(3) If the private room R to be used for the client reserving it is vacant, immediately, the required OS and application program and the required operating environment data for the client are written from the cache server 46 onto the computer 20 provided in the private room R. If the room is not vacant, the writing process is delayed until the reserved time of the client (steps N5 to N7).

Other configuration of the second embodiment is the same as that of the first embodiment and the description is omitted.

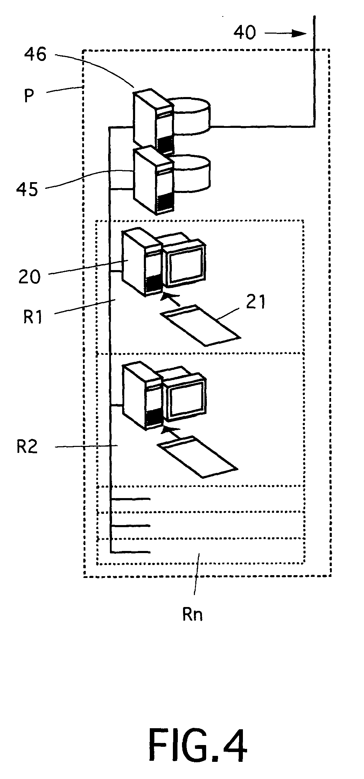

Fig. 4 is a block diagram of an essential part of a system of a third embodiment of the shop according to the present invention. In the third embodiment, both of the program server 45 accommodating the OSs and application programs and the cache server 46 to which data is transferred from the server 60 in the data management center C for accumulation, are placed on the in-shop LAN 40. The third embodiment has the features of the first and second embodiments for a purpose of attaining further prompt setup of the client accessible computer. Specifically, an OS and application program requiring a long transfer time are accommodated in the program server 45 in the shop. Operating environment data for each client which is relatively small data and requires a short transfer time is transferred from the server 60 in the data management center C into the cache server 46 in the shop for accumulation. In this case, OSs and application programs which have a high frequency of use by the clients may be accommodated in the program server 45 in the shop. OSs and application programs which have a low frequency of use may be accommodated in the program area 63 in the server 60 of the data management center C, and be transferred into the cache server 46 as required for accumulation. Other configuration of the third embodiment is the same as that of the first embodiment and the description is omitted.

In the foregoing first to third embodiments, a client may gain access via a computer outside the shop to his/her client-specific data storage area in the server 60 of the data management center C. This enables the client to use his/her data which is created with a computer at the office or home or a mobile terminal, even while being out of the office or home. Oppositely, the client can make use of the work, done at the shop, on the computer at the office or home or the mobile terminal.

The data management center C connected to the client accessible computer of the shop of the present invention, may be additionally connected to a plurality of client accessible computers provided in facilities made up of only the rental computer space of the shop according to the present invention, namely, in rental computer facilities made up of the client occupiable private territory and the client accessible computer provided in the private territory. Further, the data management center C may be connected to the LAN of the printing service shop not having the rental computer space, namely, the printing service shop including the in-shop LAN connecting to the means for inputting, creating and editing documents and/or images and the means for producing printed-output of them. Especially, since the former facilities do not require a large floor space, they may be placed in a building such as a rail station, an airport, a gas station and a rest area on a highway, or inside a conveyance such as a train, an airplane and a vessel, or outside similar to a public telephone booth. This enable the client to utilize "the virtual my-computer" at any locations.

The shop according to the present invention having the foregoing configuration exerts the following unique effects.
(1) Even without carrying one's computer or a recording medium on the road, utilization of the shop according to the present invention allows one to use a computer having the same operating environment as that of one's computer usually used, and data accumulated by oneself. For this reason, it is possible for a client to do office work in the comfortable work environment while utilizing moments of spare time on the road, and then to obtain printed-output of the office work.
(2) The client accessible computer executes the writing of an OS and an application program for each use of a client, and erases them after each use. For this reason, there is no situation in which a user changes the operating environment from the default value without permission. Thereby the next user never feels something wrong with the operability, and system errors or computer viruses cannot destroy the work environment. In consequence, the problems conventionally producing the bottleneck of the computers for rent by the hour are eliminated.
(3) By reason of the connection between a plurality of shops through the network, with making the full use of a feature of the present invention which is to reproduce the operating environment for an individual client, a plurality of persons in different places can operate the respective computers in a common operating environment. Further, when persons in different places away from one another collaborate using the respective computers, standardization of the work results is achieved.
(4) Additionally, the printing means provided in the shop, coupled with the aforementioned commonality of the operating environment, enables the persons in different places away from one another to obtain equivalent printed matters, which is especially effective at transmitting a color image having fine color tones.

## Claims

1. A shop including a multi-facility comprising:
printing means with a computer operated by an operator, provided in said shop;
a client occupiable private territory provided in said shop;
a client accessible computer placed in said private territory in said shop;
an in-shop LAN local area network provided in said shop and connecting to said client accessible computer and said printing means with the computer operated by the operator; and
a data management center provided outside said shop for managing data of a plurality of said shops, and including a server connected through an external network to said in-shop LAN of each of said shops and including a client-specific data storage area for each client issued an ID for storing data created by the client and data created in relation to the client.

2. The shop including the multi-facility according to claim 1, wherein said client occupiable private territory for each client is a desk.

3. The shop including the multi-facility according to claim 1 or claim 2, wherein said client occupiable private territory for each client is a defined space.

4. The shop including the multi-facility according to claim 3, wherein said defined space is a private room defined with walls.

5. The shop including the multi-facility according to claim 3, wherein said defined space is a booth partitioned with partition plates.

6. The shop including the multi-facility according to claim 3, wherein said defined space is a capsule having an outer shell.

7. The shop including the multi-facility according to any one of claims 1 to 6, wherein each client issued an ID gains access through said client accessible computer in said shop to said client-specific data storage area only for the client provided in said server of said data management center.

8. The shop including the multi-facility according to claim 7, wherein each client issued an ID and gains access through a computer outside said shop to said client-specific data storage area only for the client provided in said server of said data management center.

9. The shop including the multi-facility according to any one of claims 1 to 8, wherein data on an operating environment produced when each client issued an ID operates said client accessible computer in said shop, is transferred into and stored on said client-specific data storage area only for the client provided in said server of said data management center, and the stored data is transferred into and written on a selected one of said client accessible computers provided in a selected one of said shops as required to reproduce the same operating environment as that used last time by the client.

10. The shop including the multi-facility according to claim 9, wherein data on an operating environment produced when one client operates said client accessible computer in said shop, is transferred into and written on said client accessible computer used by another client to enable said another client to operate the client accessible computer in the same operating environment as that of the client accessible computer used by said one client.

11. The shop including the multi-facility according to claim 10, wherein said client accessible computers written with the data on the same operating environment as that used by said one client has access to a document and/or an image stored in the client-specific data storage area only for said one client.

12. The shop including the multi-facility according to any one of claim 1 to claim 11, further comprising means for allowing an operator of said shop or a manager of said data management center to access said client-specific data storage area only for a client in said server of said data management center by the client's permission for storing a new document and/or a new image, for editing and processing a document and/or an image stored therein, or for printing a document and/or an image from said printed-output means provided in each of said shops.

13. The shop including the multi-facility according to any one of claim 1 to claim 12, wherein said client accessible computer does not have a specific operating system and a specific application program, and receives transfer of an operating system and an application program from a program server connected to said in-shop LAN as required and executes the writing of the transferred operating system and application program.

14. The shop including the multi-facility according to any one of claim 1 to claim 13, wherein said client accessible computer does not have a specific operating system and a specific application program, and receives transfer of an operating system and an application program from a program server provided in said data management center as required and executes the writing of the transferred operating system and application program.

15. The shop including the multi-facility according to claim 13 or claim 14, wherein a new operating system and a new application program are written on said client accessible computer in each use of each client, and data on the written operating system and application program is erased from the client accessible computer after the use of the client.

16. The shop including the multi-facility according to claim 14 or claim 15, wherein an arbitrary operating system and an arbitrary application program to be written are selected by an instruction of a client, and the same operating system and the same application program as those used when a client issued an ID operated said client accessible computer in said shop last time, are automatically selected in reference with a specification table of said client-specific data storage area for the client.

17. The shop including the multi-facility according to any one of claim 1 to claim 16, wherein said in-shop LAN is connected to a cache server for said client accessible computers for receiving transfer of data from said server of said data management center and accumulating the data.

18. The shop including the multi-facility according to claim 17, further comprising:
means for accepting a reservation of a client for use of said client accessible computer; and
means for transferring required data from said server of said data management center into said cache server on said in-shop LAN in advance before a reserved time for accumulation.
